# EUROPEAN PATENT APPLICATION

(11) **EP 3 696 005 A1**
(43) Date of publication of application: **19.08.2020**
(21) Application number: 18866904.8
(22) Date of filing: 28.09.2018

(54) **DRIVE CONTROL DEVICE AND SET TRAIN MOUNTED WITH SAID DRIVE CONTROL DEVICE**

(30) Priority: 13.10.2017 JP 2017199802
(71) Applicant: Hitachi, Ltd., Tokyo 100-8280 (JP)
(72) Inventor: MOCHIZUKI, Kento, Tokyo 100-8280 (JP); OURA, Yuta, Tokyo 100-8280 (JP); ANDOU, Takeshi, Tokyo 100-8280 (JP)
(74) Representative: Mewburn Ellis LLP
(86) International application number: PCT/JP2018/036316
(87) International publication number: WO 2019/073822

(57) **Abstract**

In order to solve the problem of, when the number of self-supply sources within a set train decreases due to a failure or the like and a certain number of drive systems cannot operate, being unable to ensure torque with which a train can be self-propelled and significantly affecting a train operation, this drive control device is provided with: a plurality of power conversion devices comprising a converter for converting a first AC power into a DC power and an inverter for converting the DC power into a second AC power and driving an electric motor; a self-supply source connected to the converter of each of the power conversion devices and supplying the first AC power; and an auxiliary power supply device receiving the supply of the DC power from the DC line of each of arbitrary two power conversion devices via a connection circuit. The auxiliary power supply device has a switching circuit for connecting the DC lines of the respective two power conversion devices and supplies the first AC power supplied by one self-supply source to one or more power conversion devices, the converters of which are not connected to said self-supply source using the connection circuit and the switching circuit.

## Description

### TECHNICAL FIELD

The present invention relates to a drive control device for a train formed including power conversion devices.

### BACKGROUND ART

Trains formed with railroad cars mounted with inverter drive systems each including a power conversion device are widely used. Among such trains, there are those mounted with engines or the like as self-supply sources to make power supply for power conversion devices available from other than overhead lines. This type of trains can use, in environments where power is not available from overhead lines, power obtained from self-supply sources for driving the trains.

For example, patent literature 1 describes a train formation including one or more engines and also includes a disclosure of a formation including engines for operation and stand-by engines for the purpose of raising the rate of train operation.

### CITATION LIST

### Patent Literature

Patent literature 1: Japanese Unexamined Patent Application Publication No. 2016-23930

### SUMMARY OF INVENTION

### Technical Problem

In environments where power supply from overhead lines is not available, using self-supply sources included in a train formation (hereinafter may also be referred to simply as a "formation") makes it possible to secure running performance of the train. However, when, on account of failures, etc., power supply from a certain number of self-supply sources is lost, the drive system that was receiving power supply from the self-supply sources may become inoperable and the torque required to run the train may become unavailable to eventually cause the train to be stuck. When a train is stuck, the train needs to be pulled by another train, and operations of other trains will be greatly affected.

An object of the present invention is to provide a method of securing torque to enable, even when the number of self-supply sources included in a train formation decreases making a certain number of drive systems inoperable, the train to run on its own.

### Solution to Problem

The drive control device according to the present invention includes: a plurality of power conversion devices each including a converter for converting first AC power into DC power and an inverter for converting the DC power into second AC power and driving a motor; a self-supply source connected to the converter included in each of the power conversion devices and supplying the first AC power; and an auxiliary power supply device which receives the DC power supplied, via a connection circuit, from a DC line of each of any two of the power conversion devices. In the drive control device: the auxiliary power supply device includes a switching circuit which connects the respective DC lines of the two power conversion devices; and the first AC power supplied from one of the self-supply sources is supplied, using the connection circuit and the switching circuit, to one or more of the power conversion devices with the converters of the one or more of the power conversion devices not connected to the one of the self-supply sources.

### Advantageous Effects of Invention

According to the present invention, even when the number of self-supply sources included in a train formation decreases making a certain number of drive systems inoperable, torque equal to or larger than the torque available from a drive system can be obtained by supplying power from a self-supply source to plural drive systems.

### BRIEF DESCRIPTION OF DRAWINGS

Fig. 1 is a diagram showing a configuration example of a formation including plural engines as self-supply sources.
Fig. 2 is a diagram showing a circuit configuration for supplying power supplied from an engine to two drive systems.
Fig. 3 is a diagram illustrating drive control devices for making switching, when power supplied from an engine is to be supplied to two drive systems, and peripheral devices.
Fig. 4 is a diagram illustrating the flow of control for circuit switching to be made when supplying power supplied from an engine to two drive systems.
Fig. 5 is a diagram showing the data contents of a command selection table held in a formation control device.
Fig. 6 is a diagram illustrating power routes in a normal circuit configuration.
Fig. 7 is a diagram illustrating power supply effected in a case where power supplied from an engine is supplied to two drive systems.
Fig. 8 is a diagram illustrating effects of the present invention.
Fig. 9 is a diagram illustrating an example, as a second embodiment of the present invention, in which plural circuits each for supplying power supplied from an engine to two drive systems are configured in a formation.
Fig. 10 is a diagram illustrating, as a third embodiment of the present invention, a circuit configuration for supplying power supplied from an engine to three drive systems.
Fig. 11 is a diagram illustrating power routes in the circuit configuration shown in Fig. 10.
Fig. 12 is a diagram illustrating, as a fourth embodiment of the present invention, an example of configuration of a train formation including only one engine as a self-supply source.
Fig. 13 is a diagram illustrating, as a fifth embodiment of the present invention, another circuit configuration for supplying power supplied from an engine to two drive systems.

### DESCRIPTION OF EMBODIMENTS

In the following, embodiments 1 to 5 of the present invention will be respectively described with reference to drawings.

### First Embodiment

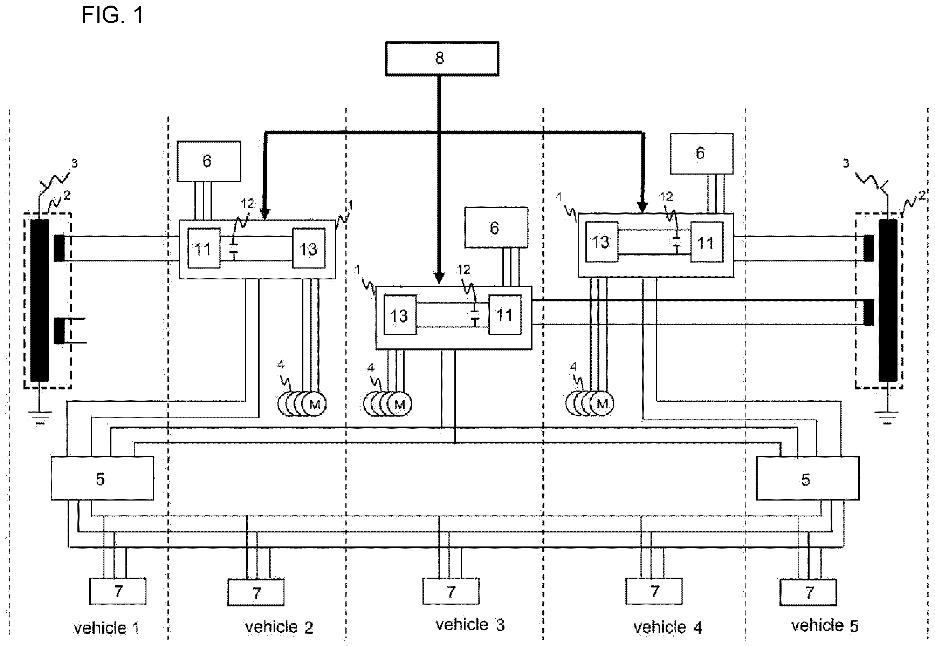

Fig. 1 is a diagram showing, as a first embodiment of the present invention, a configuration example of a train formation including plural engines as self-supply sources. The engines as self-supply sources are to be operated to drive generators to generate AC power.

The train formation shown in Fig. 1 includes five cars with cars 2, 3 and 4 being drive cars (cars each mounted with a power conversion device) and cars 1 and 5 being accompanying cars (cars each mounted with no power conversion device).

The drive cars (cars 2, 3 and 4) are each mounted with a power conversion device 1 which includes a converter 11, an inverter 13, a filter capacitor 12, and a contactor (not shown) for connecting the converter 11 and an auxiliary power supply device 5, an engine 6 as a self-supply source, and a drive control device (not shown) for controlling a main motor 4 and the power conversion device.

The accompanying cars (cars 1 and 5) are each mounted with a power collector 3, a main transformer 2, an inverter (not shown) for converting DC power into AC power, and an auxiliary power supply device 5 including a contactor (not shown) for switching a power conversion device used as a power supply source.

Further, the formation also includes a formation control device 8 having a function to control all power conversion devices 1 included in the formation. Note that the inverter 13 included in the power conversion device 1 and the main motor 4 will hereinafter be collectively referred to as a "drive system."

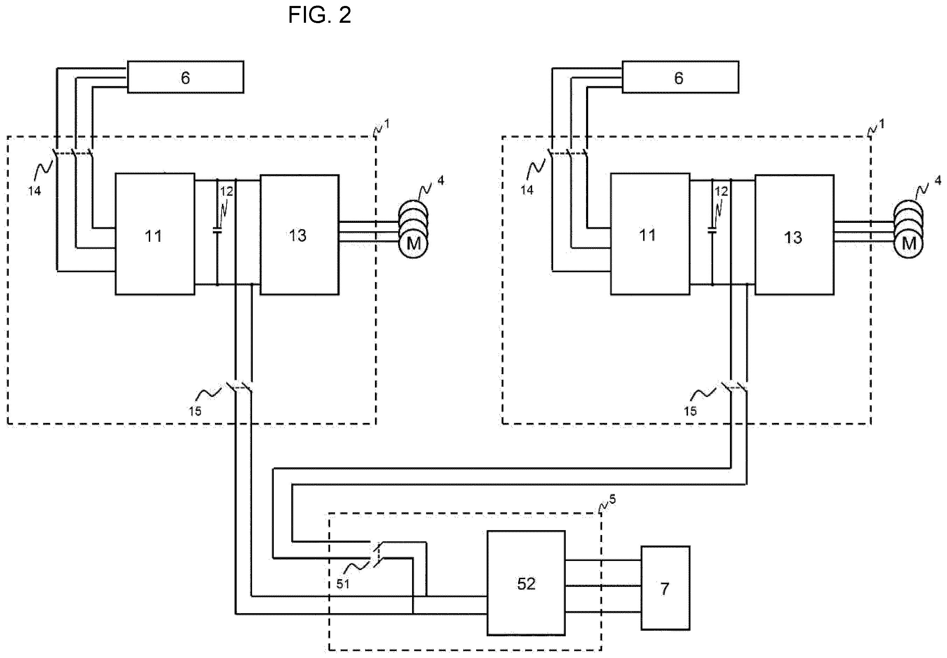

Fig. 2 is a diagram showing a circuit configuration for supplying power supplied from an engine to two drive systems.

A car (in the formation) mounted with an engine for supplying power is mounted with an engine 6 for supplying AC power, a converter 11 for converting the AC power supplied from the engine 6 into DC power, a contactor 14 for connecting the engine 6 and the converter 11, a filter capacitor 12 connected to a rear stage of the converter 11, an inverter 13 for converting the DC power supplied from the converter 11 into AC power, a main motor 4 which operates using the AC power supplied from the inverter 13, and a contactor 15 which connects the converter 11 and an auxiliary power supply device 5. A car (in the formation) to be supplied with power is also mounted with the same devices as those mounted on the car (in the formation) to supply power.

The auxiliary power supply device 5 includes a contactor 51 for switching the power conversion device 1 used as a power supply source and an inverter 52 for converting DC power into AC power.

In the circuit formed, in the car (in the formation) mounted with a power supplying engine, for supplying power from an engine 6 to two drive systems, the contactor 14 for connecting the engine 6 and the converter 11 and the contactor 15 for connecting the converter 11 and the auxiliary power supply device 5 are turned on, causing the engine 6, converter 11, inverter 13 and main motor 4 to operate. On the other hand, in the car (in the formation) to be supplied with power, the contactor 15 for connecting the converter 11 and the auxiliary power supply device 5 is turned on, causing the inverter 13 and the main motor 4 to operate. Also, in the auxiliary power supply device 5, the contactor 51 for switching the power conversion device 1 used as a power supply source is turned on, causing the inverter 52 and a load 7 to operate.

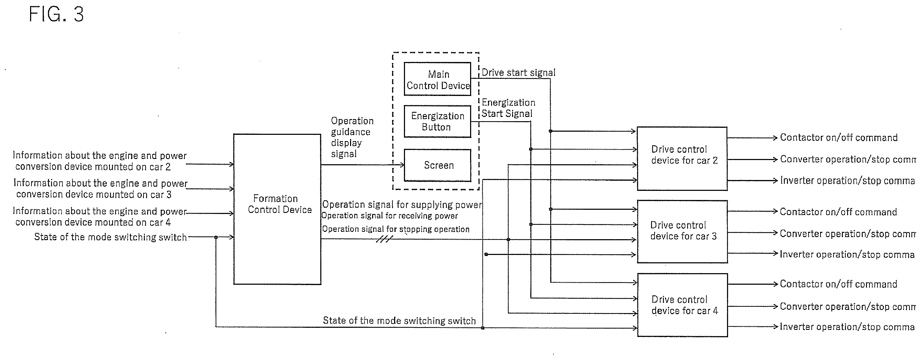

Fig. 3 is a diagram illustrating devices for making switching, when power supplied from an engine is to be supplied to two drive systems, and peripheral devices.

The formation control device uses, as input signals, information about the engine and the power conversion device mounted on each of the drive cars (cars 2, 3 and 4) and about the state of a switch (mode switch) for switching to a mode for supplying power supplied from an engine to two drive systems and outputs, as output signals, operation signals for supplying power, for having power supplied and for stopping operation.

The drive control device that the drive cars (cars 2, 3 and 4) are each equipped with uses, as input signals, output signals from the formation control device, energization start signals outputted from an energization button, drive start signals outputted from a main control device and mode switch status signals and outputs, as output signals, contactor on/off commands to the own car, operation/stop commands to the converter and operation/stop commands to the inverter.

Further, a screen provided on the car at each end of the train displays operation guidance for a train driver based on commands (operation guidance display signals) received from the formation control device.

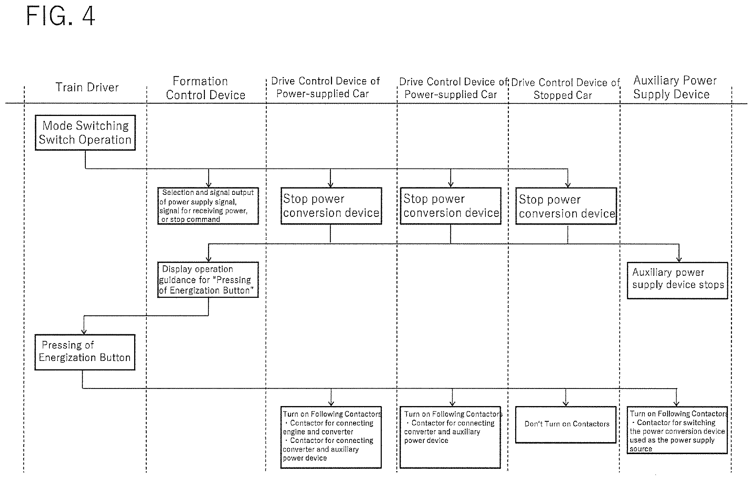

Fig. 4 is a diagram illustrating the flow of control for circuit switching to be made when supplying power supplied from an engine to two drive systems.

When, for switching to the mode for supplying power supplied from an engine to two drive systems, a train driver operates a mode switch (hereinafter referred to simply as a "switch") and changes the state of the switch, every drive control device included in the formation receives an input signal representing the state change of the switch. As a result, the drive control device of each car stops operation of the power conversion device of the car. The stopping of the power conversion device causes the auxiliary power supply devices included in the formation to stop.

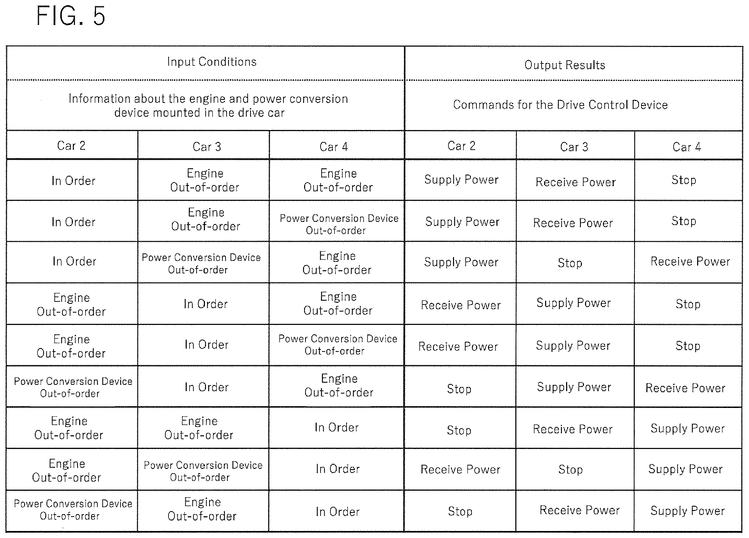

Also, the formation control device at which the input signal representing the state change of the switch is received outputs, as a command, one of an operation signal for supplying power, an operation signal for having power supplied and an operation signal for stopping operation to the drive control device of each car. The command transmitted to the drive control device of each car is determined based on the command selection table shown in Fig. 5. The command selection table is preferably provided in the formation control device.

Fig. 5 is a diagram showing the data contents of the command selection table. Information about the engine and the power conversion device mounted on each of the drive cars (cars 2, 3 and 4) is represented as input conditions (input signals to the formation control device) and the commands outputted to the drive cars (cars 2, 3 and 4) are represented as output results.

For example, in a state where both the engine and the power conversion device of car 2 are operational (in order) and the engines of cars 3 and 4 are not operational (out of order), whereas their power conversion devices are operational (a state represented in the top row of the table in the diagram), the formation control device transmits a power supply command (an operation signal for supplying power) to car 2, a power receiving command (an operation signal for having power supplied) to car 3, and a stop command (an operation signal for stopping operation to car 4, respectively.

For another example, assume a state where the engine of car 2 is operational whereas the power conversion device of the car is not operational (out of order), the engine of car 3 is not operational (out of order) whereas the power conversion device of the car is operational and both the engine and the power conversion device of car 4 are operational (in order) (a state represented in the bottom row of the table in the diagram). In the state, the formation control device transmits a power supply command (an operation signal for supplying power) to car 4, a power receiving command (an operation signal for having power supplied) to car 3, and a stop command (an operation signal for stopping operation to car 2, respectively.

When the formation control device recognizes that all power conversion devices included in the formation have stopped, the formation control device has operation guidance to urge pressing of the energization button displayed on the screen. When, in response, the driver presses the energization button, signals outputted as a result of the pressing of the energization button are transmitted to all drive control devices. When the signals are received as input signals by the respective drive control devices, the drive control devices start operations corresponding to the commands (operation signals) transmitted from the formation control device.

Specifically, the drive control device of each car having received a power supply command (an operation signal for supplying power) turns on, out of the devices mounted on the car, the contactor for connecting the engine and the converter and also the contactor for connecting the converter and the auxiliary power supply device.

The drive control device of each car having received a power receiving command (an operation signal for having power supplied) turns on, out of the devices mounted on the car, the contactor for connecting the converter and the auxiliary power supply device.

The drive control device of each car having received a stop command (an operation signal for stopping operation) turns on no contactor for connecting devices mounted on the car.

Further, the auxiliary power supply devices included in the formation turn on the contactors for switching the power conversion devices used as power supply sources.

Turning on of the above-described contactors completes circuit switching for supplying power supplied from an engine to two drive systems.

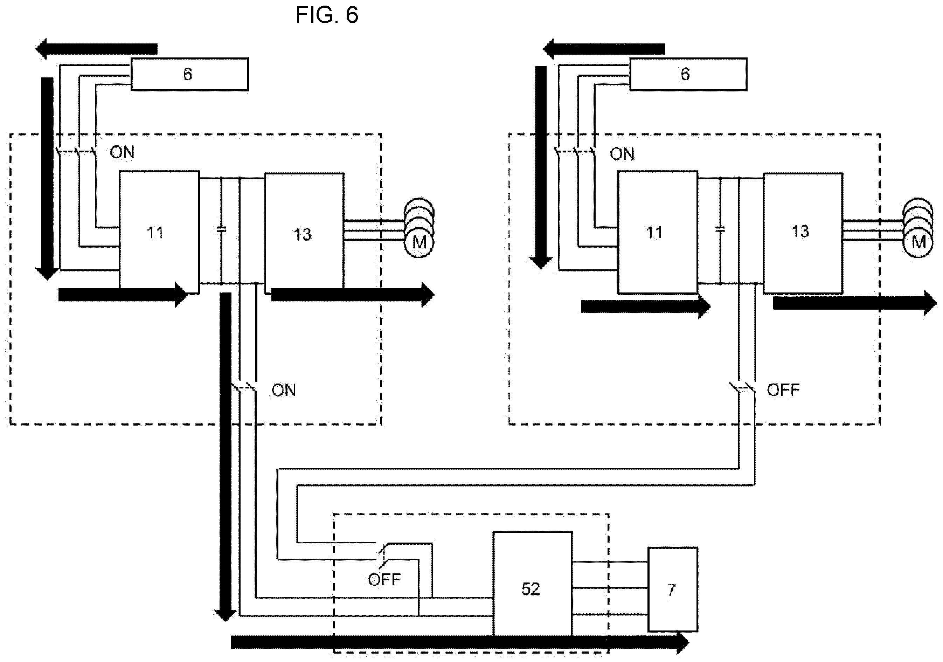

Fig. 6 is a diagram illustrating power routes in a normal circuit configuration. Power supplied from the engine of each car is supplied to the main motor of the car via the converter and the inverter mounted on the car and drives the main motor.

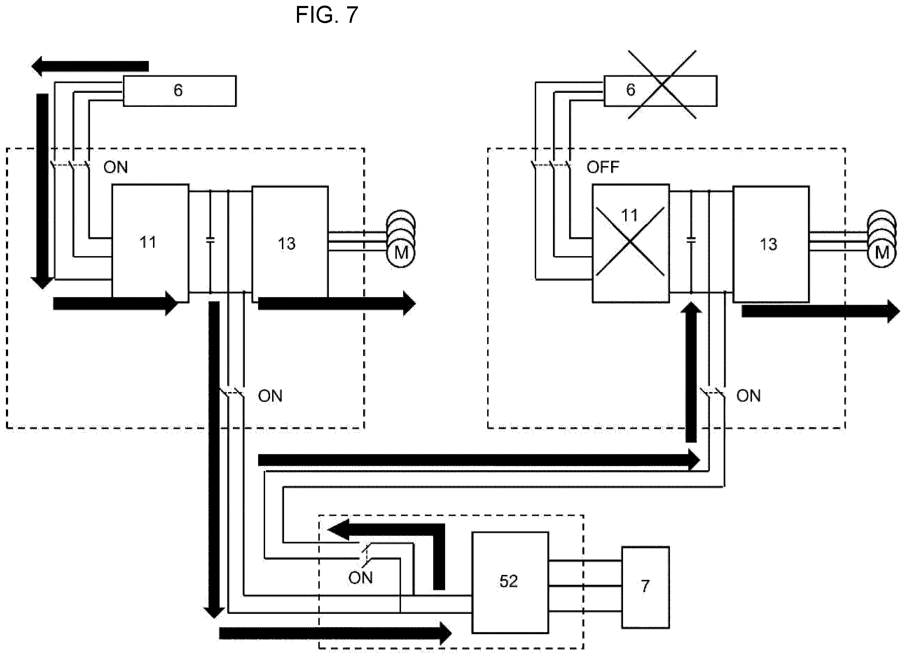

Fig. 7 is a diagram illustrating power supply effected in a case where power supplied from an engine is supplied to two drive systems. Power supplied from the engine mounted on the power supplying car is, in the car mounted with the engine to supply power, supplied to the main motor via the power route as shown in Fig. 6 and drives the main motor. Also, in the car to receive power supply, power is supplied, via the converter mounted on the car mounted with the engine to supply power, the contactor connecting the converter and the auxiliary power supply device, the contactor for switching the power conversion device provided as a power supply source in the auxiliary power supply device, the contactor connecting the converter mounted on the car to receive power supply and the foregoing auxiliary power supply device and the inverter mounted on the car to receive power supply, to the main motor connected to the output stage of the inverter and drives the main motor.

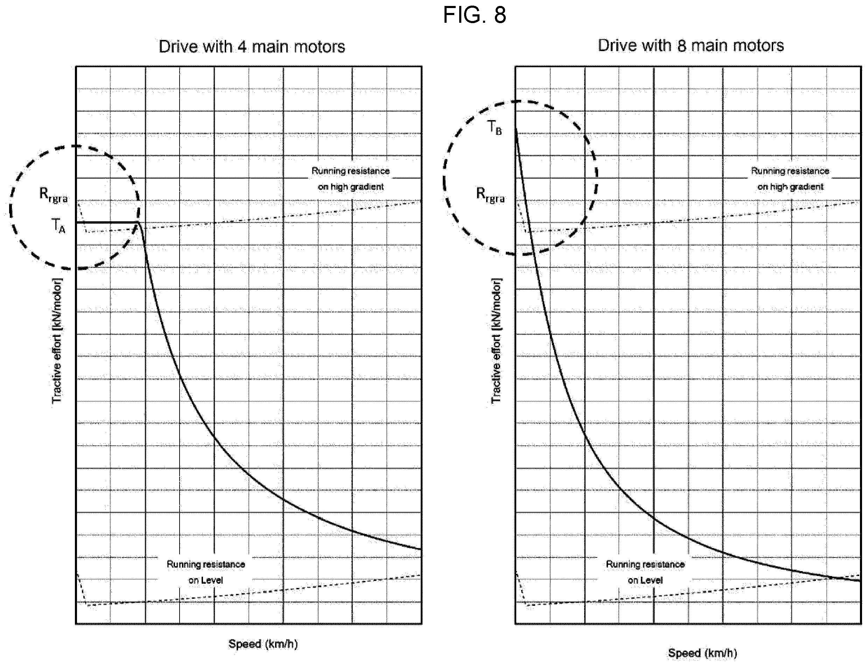

Fig. 8 is a diagram illustrating effects of the present invention. In cases where, without applying the present invention, four main motors are driven using a circuit for supplying power supplied from an engine to a drive system, torque as shown on the left side of Fig. 8 can be obtained. On the other hand, in cases where, applying the present invention, eight main motors are driven using a circuit for supplying power supplied from an engine to two drive systems, torque as shown on the right side of Fig. 8 can be obtained.

To be specific, considering a gradient environment with running resistance R_{rgra} at startup, in the case shown on the left side of the diagram without the present invention applied, T_{A} < R_{rgra}, that is, starting up is not possible with the torque obtained not exceeding the starting resistance. On the other hand, in the case shown on the right side of the diagram with the present invention applied, T_{B} > R_{rgra}, that is, starting up is possible with the torque obtained exceeding the starting resistance. Thus, by configuring a circuit according to the present invention and driving eight main motors, it is possible to obtain, at startup, higher torque than obtainable in cases where four main motors are driven.

### Second Embodiment

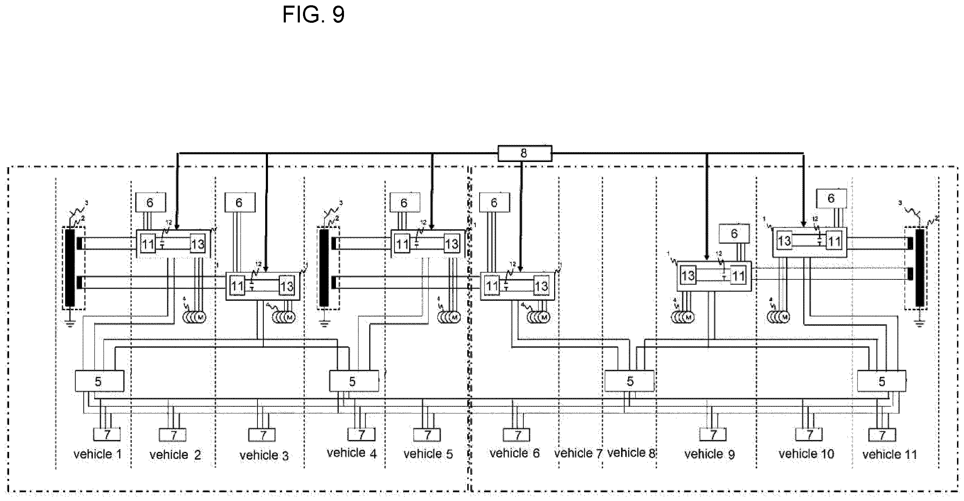

Fig. 9 is a diagram illustrating an example, as a second embodiment of the present invention, in which plural circuits each for supplying power supplied from an engine to two drive systems are configured in a formation.

When, in the formation, the input parts of the auxiliary power supply devices mounted on cars 4 and 8 are not connected, it is possible to configure a circuit according to the present invention using cars 1, 2, 3, 4 and 5 and also to configure a circuit according to the present invention using cars 6, 7, 8, 9 and 10.

### Third Embodiment

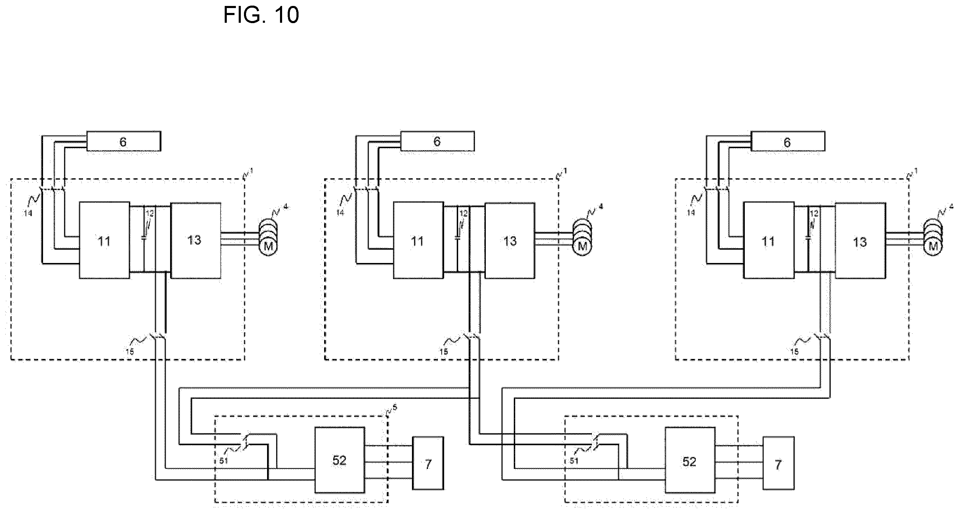

Fig. 10 is a diagram illustrating, as a third embodiment of the present invention, a circuit configuration for supplying power supplied from an engine to three drive systems.

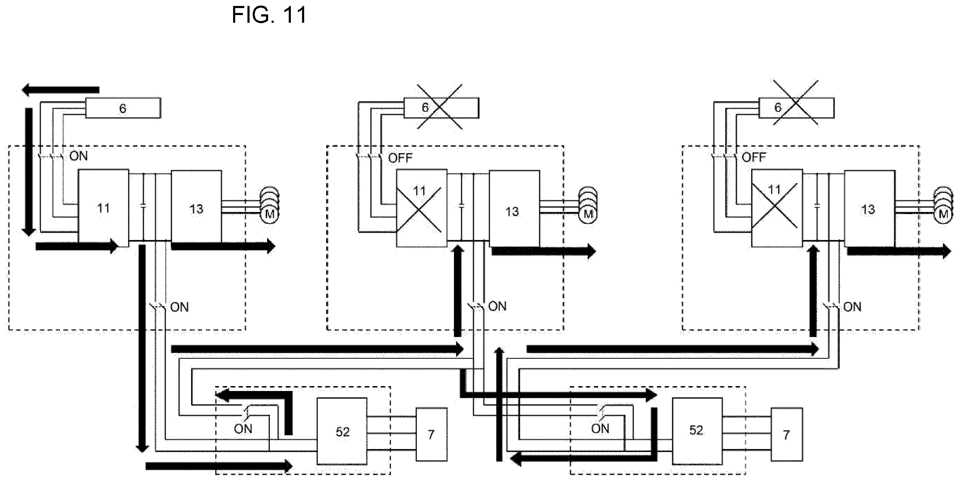

Fig. 11 is a diagram illustrating power routes in the circuit configuration shown in Fig. 10. The formation includes, in addition to the circuit configuration of the first embodiment shown in Fig. 2, an auxiliary power supply device provided with a contactor for switching a power conversion device used as a power supply source and a drive system to which power is supplied. When, in this case, the input stages of the two auxiliary power supply devices are connected, it is possible to configure a circuit for supplying power supplied from an engine to three drive systems.

As described above, according to the present invention, the number of drive systems to have power supplied need not necessarily be two, and power supplied from an engine can be supplied to two or more drive systems.

### Fourth Embodiment

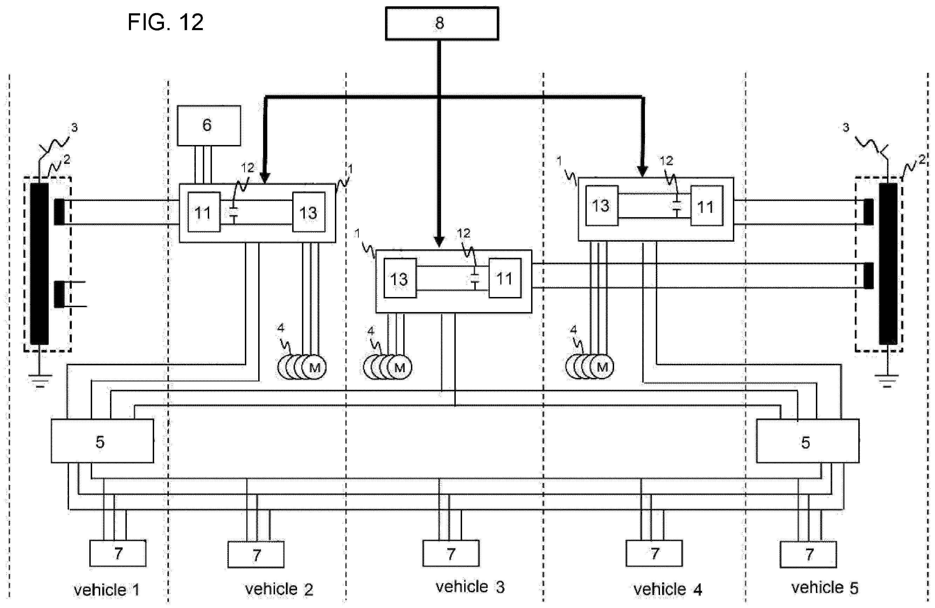

Fig. 12 is a diagram illustrating, as a fourth embodiment of the present invention, an example of configuration of a train formation including only one engine as a self-supply source.

The formation shown in Fig. 12 includes five cars with cars 2, 3 and 4 being drive cars (each mounted with a power conversion device) and cars 1 and 5 being accompanying cars (each mounted with no power conversion device). The drive cars are each mounted with a power conversion device 1 provided with a converter 11, an inverter 13, a filter capacitor 12 and a contactor (not shown) for connecting the converter and an auxiliary power supply device. Among the cars, only the car 2 is mounted with an engine as a self-supply source. Also, cars 1 and 5 are each mounted with a power collector 3, a main transformer 2, and an auxiliary power supply device 5 which includes an inverter for converting DC power into AC power and a contactor (not shown) for switching a power conversion device used as a power supply source. The present invention can be applied to the formation configured as shown in Fig. 12, too, as long as at least one engine is included in the formation.

### Fifth Embodiment

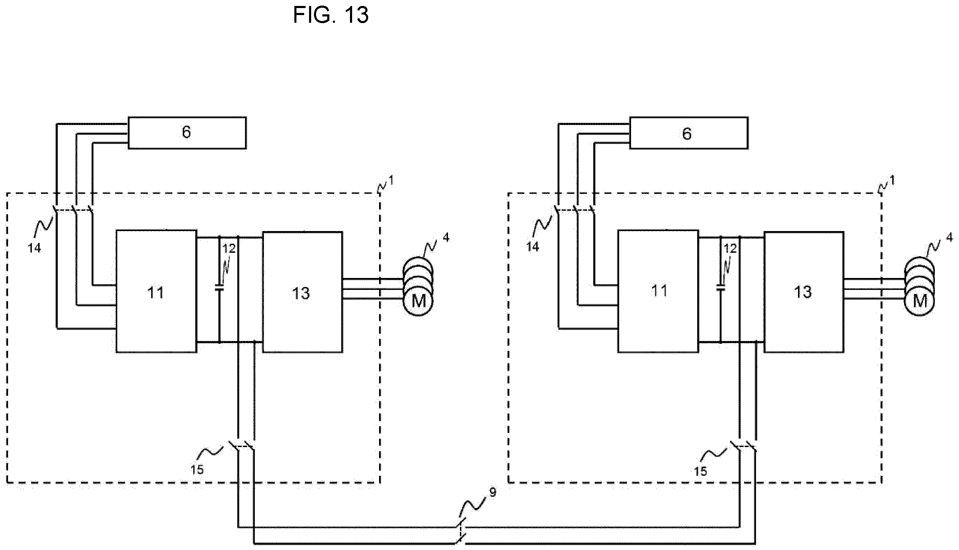

Fig. 13 is a diagram illustrating, as a fifth embodiment of the present invention, another circuit configuration for supplying power supplied from an engine to two drive systems.

Though, the configuration described as the foregoing first embodiment includes a contactor used when an auxiliary power supply device switches a power conversion device used as a power supply source, the configuration in which the auxiliary power supply device includes the contactor is not imperative for the present invention. When the contactor can connect the converters included in the two drive systems, the effects of the present invention can be achieved.

### LIST OF REFERENCE SIGNS

1 ··· power conversion device, 2 ··· main transformer, 3 ··· power collector, 4 ··· main motor, 5 ··· auxiliary power supply device, 6 ··· engine, 7 ··· load, 8 ··· organization control device, 9 ··· contactor for connecting two converters, 11 ··· converter, 12 ··· filter capacitor, 13 ··· inverter (power conversion device), 14 ··· contactor for connecting engine and converter, 15 ··· contactor for connecting converter and auxiliary power supply device, 51 ··· contactor for switching power conversion device used as power supply source, 52 ··· inverter (auxiliary power supply device)

## Claims

1. A drive control device comprising:
a plurality of power conversion devices each including a converter for converting first AC power into DC power and an inverter for converting the DC power into second AC power and driving a motor;
a self-supply source connected to the converter included in each of the power conversion devices and supplying the first AC power; and
an auxiliary power supply device which receives the DC power supplied, via a connection circuit, from a DC line of each of any two of the power conversion devices,
wherein the auxiliary power supply device includes a switching circuit which connects the respective DC lines of the two power conversion devices, and
wherein the first AC power supplied from one of the self-supply sources is supplied, using the connection circuit and the switching circuit, to one or more of the power conversion devices with the converters of the one or more of the power conversion devices not connected to the one of the self-supply sources.

2. A drive control device comprising:
a plurality of power conversion devices each including a converter for converting first AC power into DC power and an inverter for converting the DC power into second AC power and driving a motor;
a self-supply source connected to the converter included in each of the power conversion devices and supplying the first AC power; and
a connection circuit connecting respective DC lines of any two of the power conversion devices,
wherein the first AC power supplied from one of the self-supply sources is supplied, using the connection circuit, to one or more of the power conversion devices with the converters of the one or more of the power conversion devices not connected to the one of the self-supply sources.

3. The drive control device according to claim 1 or 2,
wherein each operation command to the connection circuit and the switching circuit is determined according to operating states of the power conversion device and the self-supply source.

4. A train formation comprising the drive control device according to one of claims 1 to 3.

5. The train formation according to claim 4,
wherein the self-supply source is provided not for each of the power conversion devices but for a specific one of the power conversion devices.

6. The train formation according to claim 4 or 5,
wherein the self-supply source is configured including an engine.

7. The train formation according to one of claims 4 to 6,
wherein the connection circuit and the switching circuit are each configured including a contactor.
